(19) **Europäisches Patentamt**

**European Patent Office**

**Office européen des brevets**

(11) **EP 1 041 165 A1**

(12) **EUROPEAN PATENT APPLICATION**

(43) Date of publication:
**04.10.2000 Bulletin 2000/40**

(51) Int. Cl.⁷: **C22C 21/08**

(21) Application number: **00107024.2**

(22) Date of filing: **31.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.04.1999 JP 9662299**
**18.06.1999 JP 17231999**

(71) Applicant:
**KABUSHIKI KAISHA KOBE SEIKO SHO**
**Kobe-Shi, Hyogo-ken 651-0072 (JP)**

(72) Inventors:
• **Kawai, Hitoshi,**
**Chofu Plant in Kobe Steel, Ltd.**
**Shimonoseki-shi, Yamaguchi 752-0953 (JP)**
• **Yoshihara, Shinji,**
**Chofu Plant in Kobe Steel, Ltd.**
**Shimonoseki-shi, Yamaguchi 752-0953 (JP)**
• **Hirano, Masakazu,**
**Chofu Plant in Kobe Steel, Ltd.**
**Shimonoseki-shi, Yamaguchi 752-0953 (JP)**

(74) Representative:
**Müller-Boré & Partner**
**Patentanwälte**
**Grafinger Strasse 2**
**81671 München (DE)**

(54) **Shock absorbing material**

(57)    A shock absorbing material comprising an Al-Mg-Si series aluminum alloy having high strength and showing excellent energy absorbing property when compressed in the axial direction of extrusion is obtained. The shock absorbing material of the invention has a hollow cross section, mainly comprises a fibrous structure and can be manufactured by press quenching just after extrusion followed by aging. In the press quenching, press quenching under air-cooling advantageous in view of the dimensional accuracy or the cost can be adopted. Further, the shock absorbing material of the invention has excellent cracking resistance to a compressive load in the lateral direction as well as in the axial direction. The shock absorbing material of the invention is suitable as side members or bumper stays in the frame structures of automobiles.

**EP 1 041 165 A1**

**Description**

The present invention concerns a shock absorbing material comprising an Al-Mg-Si series aluminum alloy extrusion material and having a function of absorbing impact loads when undergoing compressive impact loads. The shock absorbing material according to the present invention is suitable, for example, to side members, bumper stays or side frames in frame structures of automobiles.

In the frame structures for automobiles, it has been considered the use of aluminum alloy hollow extrusion materials in view of reduction of weight as shock absorbing materials such as side members or bumper stays. The shock absorbing materials undergoing axial compressive impact loads are required not to suffer from Eulerian buckling for the entire shape material (buckling in which the entire shape material is bent in an angled form) when undergoing loads in the axial direction of extrusion, to cause shrinking deformation in a bellows form with no cracks to provide stable high energy absorption, and have required strength (yield stress) as frame structural materials for automobiles.

As aluminum alloy extrusion materials usable as the shock absorbing material, various Al-Mg-Si series aluminum alloy extrusion materials which are relatively excellent in corrosion resistance among high strength aluminum alloys and excellent over other series aluminum alloys also in view of recycling performance have been studied so far (for example, Japanese Published Unexamined Patent Application Hei 6-25783, Japanese Published Unexamined Patent Application Hei 7-54090, Japanese Published Unexamined Patent Application Hei 7-118782 and Japanese Published Unexamined Patent Application Hei 9-256096).

As described in the publications cited above, when Al-Mg-Si series aluminum alloy extrusion materials are used for the shock absorbing materials, press quenching in on-line or solution/quenching treatment in off-line is generally applied followed by aging. The aging treatment is applied for improving the strength of the extrusion materials and stabilizing the microstructure to prevent progress of spontaneous aging which deteriorates the cracking resistance during use.

Press quenching under water-cooling has an advantage capable of providing substantially equal characteristics with those obtained by the solution/quenching treatment of applying reheating after extrusion. However, this results in a difference in the cooling rate along the cross section due to the difference of the cross sectional shape or the wall thickness of the extrusion materials, and makes the temperature distribution not uniform during cooling to cause distortion. Accordingly, it results in problems that the accuracy is poor, thickness for the cross sectional shape is difficult to be reduced and the degree of freedom for the cross sectional shape is restricted if it is intended to prevent occurrence of such distortion. There is also an additional problem that it requires higher cost compared with that in air-cooling.

On the other hand, press quenching under air-cooling has a merit of reduced cost compared with press quenching under water-cooling. However, since the cooling rate is limited, it results in a problem that no high strength (particularly, yield stress) can be obtained depending on the alloy compositions and, even when a high strength can be obtained, the energy absorption or the cracking resistance is poor.

In view of the above, it is an object of the present invention to provide a shock absorbing material comprising an Al-Mg-Si series aluminum alloy suitable to press quenching under air cooling and capable of obtaining high strength.

Further, Al-Mg-Si series aluminum alloy extrusion materials involve a worry that spontaneous aging progresses to deteriorate the cracking resistance when exposed at a high temperature during use thereof, for example, as side members. Aging treatment is applied as an essential condition to prevent this in a case of using heat treated type Al-Mg-Si series aluminum alloy extrusion materials as a shock absorbing materials. However, when strength is improved by T5, T6 treatment, it involves a problem of causing cracks when subjected to axial compressive deformation. If cracks should occur, shrinking detonation in the bellows-form is inhibited failing to obtain stable energy absorption.

Further, it has been demanded recently that Al-Mg-Si series aluminum alloy extrusion materials can be utilized also as other frame structural materials for automobiles such as side frames that undergo lateral impact loads with a view point of recycling use.

In view of the above, it is a second object of the present invention to provide an Al-Mg-Si series aluminum alloy extrusion material having high strength (yield stress) with excellent cracking resistance in the axial direction and energy absorbing property and, at the same time, excellent cracking resistance also in the lateral direction.

The present inventors have found an alloy composition and a structure having high strength (yield stress) and showing excellent energy characteristics when compressed in the axial direction of extrusion (showing high energy absorption with no occurrence of cracks) for the shock absorbing material of an Al-Mg-Si series aluminum alloy based on the premise of adopting press quenching under air cooling, which is advantageous in view of the dimensional accuracy and the cost.

The shock absorbing material according to the first aspect of the present invention comprises an Al-Mg-Si series aluminum alloy which contains from 0.30 to 0.70wt% of Mg from 0.10 to 0.50wt% of Si in excess of the balanced composition for $Mg_2Si$ and from 0.10 to 0.40wt% of one or more of Mn, Cr and Zr in total, and has a fibrous structure, and has an yield stress of 210 MPa or more, which is subjected to press quenching under air cooling and then aging after extrusion into a hollow cross sectional shape.

The Al-Mg-Si series alloy optionally contains from 0.005 to 0.2% of Ti, from 0.10 to 0.40% of Cu and the like and contains Fe and other elements as inevitable impurities.

In the Al-Mg-Si series aluminum alloy extrusion materials, the addition amount of Mg-Si and transition elements (such as Cu, Mn, Cr and Zr) is generally increased if it is intended to increase the strength after the aging treatment, in which precipitates inevitably increase at the grain boundaries to concentration strain to the grain boundaries. Further, the quenching sensitivity is generally increased as the amount of the additive elements increases and the amount of the precipitates at the boundaries also increases at a low cooling rate (for example, in air cooled press quenching which is advantageous in view of the dimensional accuracy or the cost), tending to cause cracks when crushed under large impact loads.

On the contrary, the present inventors have found that Al-Mg-Si series aluminum alloy extrusion materials tend to cause cracks if the macrostructure thereof mainly comprises a recrystallization structure but occurrence of such cracks can be suppressed even at a high strength if it mainly comprises a fibrous structure (in a state where the fibrous structure after extrusion is left as it is with no recrystallization also during a heat treatment step subsequent to the extrusion step). On the other hand, it has also been found that the fibrous structure is loosened when the solution quenching treatment is applied in off-line and that formation of a surface recrystallization layer to a certain thickness is advantageous in order to obtain required characteristics by on-line press quenching.

The second aspect of the present invention invention has been accomplished based on the finding described above.

The Al-Mg-Si series aluminum alloy shock absorbing material according to the present invention comprises an Al-Mg-Si series aluminum alloy of a hollow cross section containing from 0.20 to 1.1wt% of Mg and from 0.20 to 1.2wt% of Si, which is aged after press quenching having an yield stress of 200 MPa or more and a surface recrystallization layer with a thickness of 1 to 50% for the entire part and the crystal grain size in the direction of the thickness of the surface recrystallization layer is 200 $\mu$m or less.

The fibrous structure layer is present on the inside of the surface recrystallization layer of the extrusion material.

In the course of various experiment and studies for developing the aluminum alloy extrusion material of excellent cracking resistance, the present inventors have found that the reduction rate of thickness along the ruptured cross section of a JIS No. 5 tensile test piece sampled from an extrusion material of a hollow cross section is closely related with the cracking resistance of the extrusion material and have accomplished the third aspect of the present invention.

That is, the shock absorbing material of the Al-Mg-Si series aluminum alloy according to the third aspect of the present invention has a thickness reduction rate for the ruptured cross section of 25% or more when applying a tensile test for JIS No. 5 tensile test piece. The thickness reduction rate for the fractured surface (hereinafter referred to as draft) is represented by $(1-a/a_0) \times 100$, assuming the average thickness at the ruptured cross section of the tensile test piece as a, while assuming the original thickness of the tensile test piece as $a_0$.

The aluminum alloy according to the third aspect of the present invention is an Al-Mg-Si series aluminum alloy containing from 0.2 to 1.1% of Mg and from 0.2 to 1.2% of Si.

Fig. 1 is a view showing a cross sectional shape of an extrusion material used in examples;

Fig. 2 is a view for explaining a longitudinal crushing test for each of the examples (before and after crushing);

Fig. 3 is a view for explaining a lateral crushing test for each of the examples (before and after crushing);

Fig. 4 is a view showing a cross sectional shape of an extrusion material used in Examples 2 and 3.

For obtaining high strength and excellent energy absorbing characteristic as the shock absorbing material, it is desirable that the microstructure of the extrusion material is a fibrous structure (fibrous structure formed by extrusion is left as it is without recrystallization during the heat treatment step subsequent to the extrusion step). Generally, the transition elements such as Mn, Cr and Zr are added to the Al-Mg-Si series aluminum alloy used for the shock absorbing material but addition of such transition elements increases the quenching sensitivity of the alloy. Further, while the strength of the alloy is improved as the amount of Mg and excessive Si increases, the quenching sensitivity is also increased.

In a case of applying water-cooled press quenching or solution/quenching treatment, quenching is attained with no problem even when the quenching sensitivity is somewhat sharp and high strength can be obtained by the subsequent aging treatment. However, if the quenching sensitivity is increased in the air-cooled press quenching, high strength can no more be obtained even by the subsequent aging treatment. That is, if the alloy element is added with an aim of improving the strength, this may rather lower the strength.

In the first aspect of the present invention, the positive function and effect by the addition of each of the elements is necessary for obtaining high strength and excellent energy absorbing property by the aging treatment after air cooled press quenching, but it is essential as well not to increase the quenching sensitivity. With the view point described above, an optimal alloy composition is defined for the impact absorbing material, particularly, undergoing air cooled press quenching.

Now, the composition of the extrusion material constituting the shock absorbing material according to the first aspect of the present invention is to be explained.

Mg, Si:

Mg and Si are bonded to form $Mg_2Si$ and improve the alloy strength. For obtaining strength required as the frame structural material of automobiles, Mg has to be added by 0.30% or more. However, if it is added in excess of 0.70%, the quenching sensitivity is increased and quenching is not attained by the air-cooled press quenching failing to attain necessary strength. Accordingly, the Mg content is defined within a range from 0.30 to 0.70%, preferably, from 0.40 to 0.60% and, more preferably, from 0.45 to 0.55%.

On the other hand, if the amount of excess Si (Si in excess of the balanced composition for $Mg_2Si$, which is defined as "excess Si amount (%) = total Si amount - 0.578 × Mg amount" ) is 0.10% or less, the required strength can not be obtained. If it exceeds 0.50%, the quench sensitivity is increased and quenching is not attained by air-cooled press quenching and no required strength can be obtained. Accordingly, the content of excess Si is defined as from 0.10 to 0.50%. Within the range for the amount of Mg and the excess Si, the total Si amount is particularly preferably from 0.5 to 0.7% as a range which can provide high strength and does not increase the quenching sensitivity not so much. Further, a more preferred range for the excess amount of Si is from 0.22 to 0.40%.

Mn, Cr, Zr:

Mn, Cr, Zr have a function of forming a fibrous structure in the extrusion material to improve the cracking resistance and one or more of them is (are) added within a range from 0.10 to 0.40% in total. If the addition amount of the transition elements is less than 0.10%, no fibrous structure is formed or a thick surface recrystallization layer is formed to cause cracks. If the addition amount exceeds 0.40%, quenching is not attained by air-cooled press quenching and the required strength as the frame structural materials for automobiles is not developed. A desired range for each of the elements is from 0.001 to 0.35% of Mn, from 0.001 to 0.20% of Cr and from 0.001 to 0.20% of Zr. Further, a more preferred range for the addition amount of the transition elements in total is from 0.20 to 0.30%. The preferred range for each of the elements is from 0.05 to 0.25% of Mn, from 0.001 to 0.15% of Cr and from 0.05 to 0.18% of Zr. A further preferred range for the addition amount of the transition elements in total is from 0.22 to 0.28%. The desired range for each of the elements is from 0.10 to 0.20% of Mn, from 0.001 to 0.10% of Cr and from 0.07 to 0.14% of Zr.

In the alloy according to the present invention, the addition amount of the transition elements is defined as the minimum amount capable of maintaining the fibrous structure in the extrusion material by air-cooled press quenching. Therefore, when the solution/quenching treatment is applied in off-line instead of press quenching, recrystallization proceeds by the heating upon solution treatment. That is, press quenching is an essential condition of forming the fibrous structure for the alloy composition according the present invention.

Then, the fibrous structure is desirably formed to the entire cross section of the extrusion material. If the surface recrystallization layer is formed, it is necessary that the layer is about at a depth of 500 μm or less (desirably, 300 μm) from the surface of the extrusion material and the thickness of the fibrous structure is about 1/2 or more for the entire thickness in a case of an extrusion material of 1 to 5 mm thickness as in the frame structural materials for automobiles. This is because distortion is concentrated at the grain boundaries of the surface crystallized grains tending to cause cracks since the crystal grain size is greater compared with the fibrous structure, particularly, the cooling rate is lower in a case of the water cooled press quenching compared with that in water cooling and the amount of precipitates precipitating to the crystal grain boundaries during cooling step is increased, so that distortion is concentrated to the grain boundaries of the surface recrystallized grains tending to cause cracks. If the addition amount for the transition elements such as Mn is less than the above mentioned range, it is difficult to keep the thickness for the surface recrystallization layer to 500 μm or less in the air cooled press quenching.

Cu:

Cu has a function of improving the strength of the Al-Mg-Si series aluminum alloy and improving the stress corrosion cracking resistance, and is added optionally. However, if it is less than 0.10%, the effect is insufficient. On the other hand, the extrudability and the general corrosion resistance are deteriorated if it exceeds 0.40%. Accordingly, the content is preferably from 0.10 to 0.40%. A more preferred range is from 0.15 to 0.35% and a further preferred range is from 0.18 to 0.30%.

Ti:

Ti has a function of refining an ingot structure and is added properly. However, the refining effect is insufficient if it is less than 0.005%, whereas it is saturated to form macro compounds if the addition amount is more than 0.2%. Accordingly, the Ti content is from 0.005 to 0.2%. A more preferred range is from 0.01 to 0.10% and a further preferred range is from 0.015 to 0.050%.

Inevitable Impurity:

Among inevitable impurities, Fe is an impurity contained by the greatest amount in the raw aluminum metal and, if present in excess of 0.35% in the alloy, it would crystallize huge intermetallic compounds during casting deteriorating mechanical properties of the alloy. Accordingly, the Fe content is restricted to 0.35% or less. It is preferably 0.30% or less and, further preferably, 0.25% or less. Further, upon casting the aluminum alloy, impurities are intruded in various ways such as from raw metals and intermediate alloys of the additive elements. There are various intruding elements but impurities other than Fe scarcely give effects on the properties of alloy if contained by 0.05% or less as individual content and 0.15% or less by the total amount. Accordingly, the content of the impurities is defined as 0.05% or less as the simple element and 0.15% or less as the total amount. Among the impurities, B is intruded accompanying addition of Ti by about 1/5 of the Ti content in the alloy and a more preferred range is 0.02% or less and a further preferred range is 0.01% or less.

In the first aspect of the present invention, the aging treatment is applied after the air-cooled press quenching for the extrusion material having the composition described above. The strength (yield stress) after the aging treatment is defined as 210 MPa or more as the strength required for the frame structural materials of automobiles. This strength can be obtained by applying the aging treatment after the air-cooled press quenching for the extrusion material of the composition described above. However, out of the range of the composition, no desired strength can be developed (energy absorption is lowered as well) or no fibrous structure is formed to deteriorate the energy absorption characteristics. A preferred range for the yield stress is 220 MPa or more.

Desired production conditions in the first invention are to be described. For obtaining products containing the fibrous structure in a great amount, a homogenization treatment is applied at 450°C to 550°C for 2 to 8 hours and the extrusion temperature is defined as 450 to 520°C. The aging treatment is conducted appropriately at 160 to 230°C for 1 to 8 hours. An appropriate cooling rate is from 100 to 300°C/min.

Then, the composition of the extrusion material according to the second aspect of the present invention is to be explained.

Mg, Si:

Mg and Si are bonded to form $Mg_2Si$ and improve the alloy strength. For obtaining strength required as the frame structural material of automobiles, Mg has to be added by 0.20% or more. However, if it is added in excess of 1.1%, the quenching sensitivity is increased and quenching is not attained by press quenching at low cooling rate. As the result, the necessary strength can not be attained. Accordingly, the Mg content is defined within a range from 0.20 to 1.1%, preferably, from 0.40 to 0.80% and, more preferably, from 0.40 to 0.60%.

On the other hand, if the amount of Si is 0.20% or less, required strength can not be obtained. If it exceeds 1.2%, the quench sensitivity is increased and quenching is not attained by press quenching at low cooling rate and no required strength can be obtained. Accordingly, the content of excess Si is defined as from 0.20 to 1.2%, preferably, from 0.50 to 1.0% and, more preferably, from 0.50 to 0.70%.

Mn, Cr, Zr;

The reason for defining the numerical values for the range of the content is identical with that in the first aspect of the present invention. However, preferably, one or more of them may be added within a range from 0.05 to 0.40% for Mn, from 0.05 to 0.20% for Cr and from 0.05 to 0.20% for Zr. More preferably, Mn is from 0.05 to 0.25%, Cr is from 0.05 to 0.15% and Zr is from 0.05 to 0.15%. Further, the total amount of addition for the transition elements is from 0.05 to 0.60%, preferably, from 0.10 to 0.40% and, more preferably from 0.2 to 0.3%.

Cu:

The reason for defining the numerical values for the range of the content is identical with that in the first aspect of the present invention. However, a preferred range is from 0.05 to 0.7% and, more preferred range from 0.10 to 0.35%.

Ti:

The reason for defining numerical values for the range of the content, and the content are identical with those in the first aspect of the present invention.

Surface Recrystallization Layer

In the Al-Mg-Si series aluminum alloy extrusion material described above, it is preferred that the fibrous structure of the extrusion material is formed substantially for the entire cross section of the extrusion material. In a case of the extrusion material of 1 to 5 mm thickness as in the frame structural materials for automobiles, it is necessary that the surface recrystallization layer is 50% or less for the entire thickness. Preferably it is 30% or less. This is because the recrystallized grains have a larger crystal grain size compared with the fibrous structure, the amount of precipitates precipitating to the crystal grain boundaries is increased in the course of cooling if the cooling rate is low and distortion is concentrated to the grain boundaries of the surface recrystallization grains tending to cause crackings.

On the other hand, the Al-Mg-Si series aluminum alloy extrusion material having the constitution and the thickness described above can provide the fibrous structure over substantially entire cross section of the extrusion material (the thickness of the surface recrystallization layer is less than 1% of the entire thickness) at the extrusion rate of 5 m/min or lower. However, since it takes much time before entering the quenching zone in the press quenching (online) at such a low extrusion rate, quenching is difficult making it difficult to obtain a required strength, energy absorption amount and maximum load. Accordingly, it is necessary that the thickness of the surface recrystallization layer is 1% or more for the thickness. It is preferably 5% or more.

Further, it is preferred that the crystal grain size of the surface recrystallized grains is 200 $\mu$m or less and, further preferably, 100 $\mu$m or less. This is because distortion is concentrated more tending to cause cracks as the grain size of the surface recrystallized grains is larger.

Then, the composition for the extrusion material according to the third aspect of the present invention is to be explained.

Mg, Si:

The reason for defining numerical values for the range of the contents is identical with that in the second aspect of the present invention. However, a preferred range is from 0.20 to 1.1%, more preferably from 0.40 to 0.8% of Mg and from 0.20 to 1.2%, more preferably from 0.50 to 1.1% of Si.

Mn, Cr, Zr:

The reason for defining the numerical values for the range of the content and the range is identical with that in the second aspect of the present invention.

Cu:

The reason for defining the numerical values for the range of the content and the range is identical with that in the second aspect of the present invention.

Ti:

The reason for defining the numerical values for the range of the content and the range is identical with that in the first aspect of the present invention.

Examples of the present invention are to be explained below.

Example 1

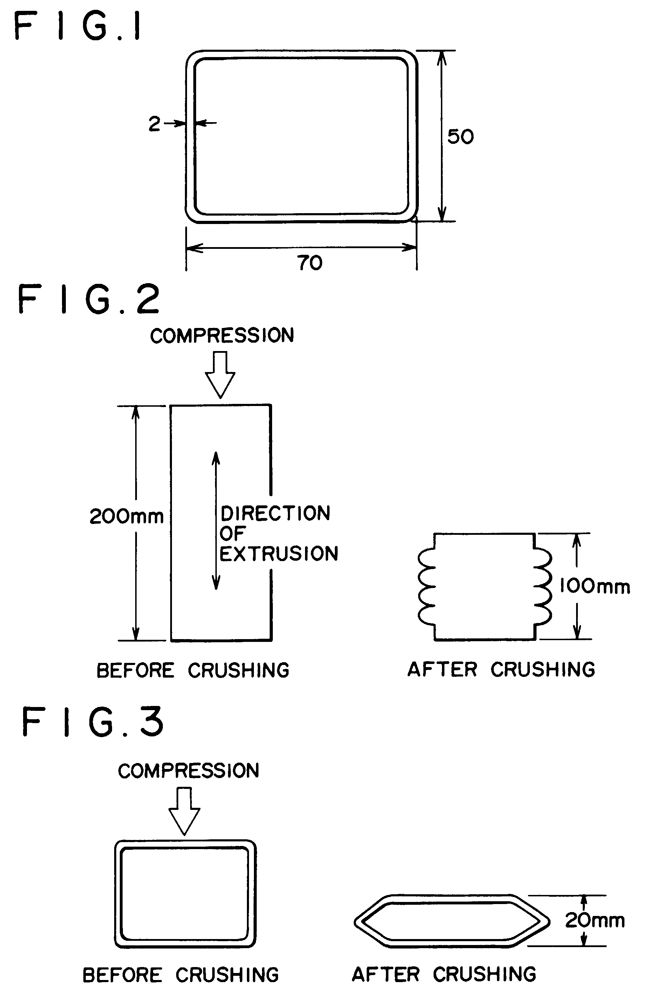

Al-Mg-Si series aluminum alloy billets of the chemical compositions shown in Fig. 1-1 were manufactured by melting by DC casting, and applied with a soaking treatment at 550°C × 4 hr. Successively, by conducting extrusion under the conditions of an extrusion temperature at 500°C and an extrusion rate of 5 m/min, and press quenching (blower air cooling (cooling rate: about 190°C/min)) at the position just after the extrusion to obtain an extrusion material of a hollow cross section as shown in Fig. 1 (70 mm for longer side, 50 mm for shorter side and 2 mm for thickness). Then, the extrusion material was applied with an aging treatment at 190°C × 3 hr to prepare test specimens. The thickness of the recrystallization layer from the outer surface and the inner surface at the central portion of the longer side and the shorter side for the cross section of the test specimen was measured to determine the thickness as an average value for 8 positions. The result is shown in Table 1.

Table 1-1

| Chemical Composition of Surface Layer (wt%) | | | | | | | | | | | | |
|---|---|---|---|---|---|---|---|---|---|---|---|---|
| No. | Si | Mg | Fe | Cu | Mn | Cr | Zr | Zn | Ti | Mn+Cr+Zr | Excess Si | Thickness of surface recrystallization layer (one side) |
| 1 | 0.58 | 0.54 | 0.20 | 0.20 | 0.15 | tr. | 0.09 | tr. | 0.02 | 0.24 | 0.27 | 200μm |
| 2 | 0.66 | 0.51 | 0.20 | tr. | 0.15 | tr. | 0.13 | tr. | 0.02 | 0.28 | 0.37 | 100 |
| 3 | 0.61 | 0.51 | 0.20 | 0.20 | 0.25 | tr. | 0.13 | tr. | 0.02 | 0.38 | 0.32 | 50 |
| 4 | 0.60 | 0.50 | 0.20 | 0.35 | 0.08 | 0.08 | 0.10 | tr. | 0,02 | 0.26 | 0.31 | 50 |
| 5 | 0.30 | 0.52 | 0.22 | 0.19 | 0.15 | tr. | 0.10 | tr. | 0.02 | 0.25 | 0.00* | 200 |
| 6 | 0.85 | 0.50 | 0.23 | 0.21 | 0.14 | tr. | 0.09 | tr. | 0.02 | 0.23 | 0.56* | 200 |
| 7 | 0.55 | 0.25* | 0.21 | 0.20 | 0.16 | tr. | 0.09 | tr. | 0.02 | 0.25 | 0.41 | 200 |
| 8 | 0.56 | 0.75* | 0.18 | 0.20 | 0.15 | tr. | 0.09 | tr. | 0.02 | 0.24 | 0.13 | 200 |
| 9 | 0.569 | 0.53 | 0.19 | 0.20 | tr. | tr. | 0.09 | tr. | 0.02 | 0.09* | 0.28 | 600 |
| 10 | 0.57 | 0.51 | 0.21 | 0.21 | 0.35 | tr. | 0.09 | tr. | 0.02 | 0.44* | 0.28 | 50 |

\* not satisfying the definition of the present invention

JIS No. 5 test specimens were sampled from the test materials and a tensile test was conducted according to JIS Z 2241. The result is shown in Table 1-2.

Further, a static axial crushing test was conducted for the test materials. The test material of 200 mm length was axially applied with a static compressive load by an Amsler tester as shown in Fig. 2, and the test material was compressed by 100 mm, to obtain a load-displacement curve, and the maximum load and the absorption energy up to 100 mm were determined. The test result is also shown together in Table 1-2. The cracking resistance was evaluated visually in which those free from occurrence of open cracks was evaluated as "◯ " and those with occurrence of open cracks were evaluated as "X". As the overall evaluation, those having an yield stress ($\sigma_{0.2}$) of 210 MPa or more and also excellent in cracking resistance were evaluated as "◯" and those poor in one of them were evaluated as "X"

Table 1-2

| No. | Tensile test | | | Compression test | | | Overall evaluation |
|---|---|---|---|---|---|---|---|
| | σ0.2 (Mpa) | σB (Mpa) | Elongation (%) | Maximum load (kN) | Absorption energy (J) | Cracking resistance | |
| 1 | 228 | 270 | 14.1 | 99.4 | 3390 | ○ | ○ |
| 2 | 232 | 276 | 14.0 | 96.2 | 3070 | ○ | ○ |
| 3 | 219 | 261 | 14.2 | 89.2 | 2980 | ○ | ○ |
| 4 | 217 | 252 | 15.9 | 88.5 | 2990 | ○ | ○ |
| 5 | 172* | 220 | 17.8 | 80.3 | 2610 | ○ | X |
| 6 | 116* | 187 | 20.2 | 67.7 | 2410 | ○ | X |
| 7 | 106* | 167 | 14.5 | 70.5 | 2500 | ○ | X |
| 8 | 110* | 181 | 19.2 | 68.1 | 2530 | ○ | X |
| 9 | 240 | 277 | 11.6 | 102 | 2820 | X | X |
| 10 | 136* | 197 | 11.8 | 72.7 | 2510 | ○ | X |

*Result at Tensile Strength and Compression Test*

*not satisfying the definition of the present invention

As shown in Table 1-2, alloys (Nos. 1 - 4) within the range of the composition defined in the present invention show high yield stress and excellent energy absorbing characteristics (with no cracks, high energy absorption) though they were obtained by press quenching under air cooling.

On the other hand, alloys (Nos. 5 - 10) not satisfying the definition for the composition according to the present invention can not reach the yield stress of 210 MPa which is a required strength as the flame structural materials of automobiles, or are inferior in the cracking resistance and lowered for the energy absorption although the yield stress is high(No. 9).

Example 2

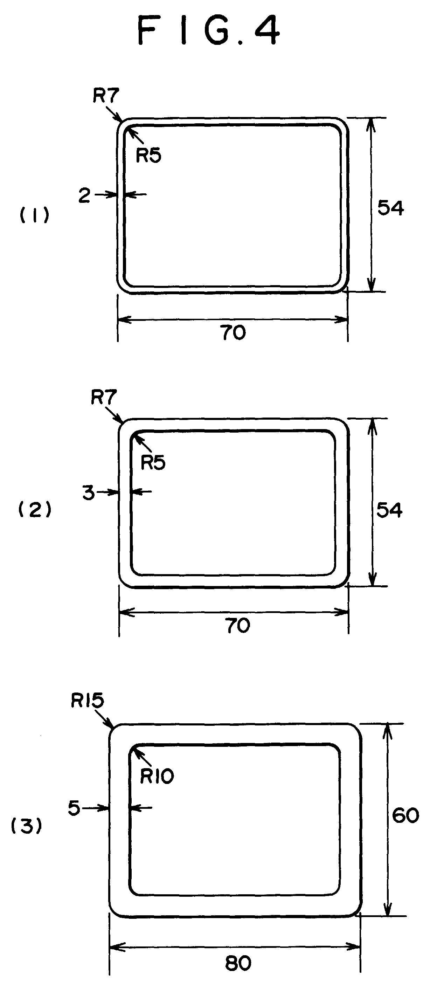

Al-Mg-Si series aluminum alloy billets of the chemical compositions shown in Table 2-1 were manufactured by melting by DC casting and applied with a soaking treatment at 550°C × 4 hr. Successively, extrusion was conducted at an extruding temperature of 500°C and at a extruding rate shown in Table 2-1, and air cooled or water cooled press quenching in on-line was applied just after extrusion to obtain extrusion materials each of a hollow rectangular cross section as shown in Fig. 4 (having 70 - 80 mm long or side, 54- 60 mm shorter side and 2 - 5 mm thickness). Air cooling was applied by a blower air cooling at a cooling rate of about 190°C/min, whereas water cooling was applied at a cooling rate of about 10000°C/min. Then, an aging treatment at 190°C for 3 hours was applied to the extrusion materials to obtain test materials.

For the test materials, thickness of the surface recrystallization layer (GG layer), crystal grain size in the surface recrystallization layer, mechanical properties and cracking resistance in the longitudinal and lateral directions were examined by the following procedures. The results are shown in Table 2-1 and Table 2-2.

Thickness of Surface Recrystallization Layer:

Along the cross section in parallel with the extruding direction, 4 points on the surface and 4 points on the rear face were selected, the thickness of the recrystallization layer was measured at each of the points, the measured values were averaged for those on the surface and the rearface respectively, and the thickness of the GG layer was defined as the sum of the mean values on the surface and the mean values on the rearface.

Grain Size of the Surface Recrystallization Layer:

Along the cross section parallel with the extruding direction, four points on the surface and four points on the rearface were measured by a cutting method from the surface toward the center of the thickness and the measured values were averaged as the grain size of the GG layer. The grain size was measured from the surface toward the center of the thickness in this test, because the grain size measured along this direction has a particular concern with the occurrence of cracks (in the present invention, when the thickness of the surface recrystallization layer is not sufficiently larger than the grain size of the surface recrystallization layer and the measurement for the grain size is difficult, it is defined as: grain size for the surface recrystallization layer = thickness for the surface recrystallization layer).

Mechanical Property;

JIS No. 5 Test specimens were sampled from the test material and a tensile test was conducted according to JIS Z 2241.

Longitudinal Compression Property:

Using a test material of 200 mm length, a static -compression load was applied axially as shown in Fig. 2 by an Amsler Tester, which was compressed to 100 mm thereby obtaining a load/displacement cure, and the maximum load and the absorption energy act 100 mm were determined. The cracking resistance property was evaluated visually and those free from the occurrence of cracks were evaluated as "◎ ", those with occurrence of fine cracks were evaluated as "○ " and those with occurrence of open cracks were evaluated as "X".

Lateral Compression Characteristic:

Using a test material of 200 mm length, a static compressive load was applied by placing the material horizontally such that the upper sides were situated on upper and lower positions as shown in Fig. 3, which was compressed to 20 mm and the cracking resistance was evaluated visually. Those free from the occurrence of cracks were evaluated as "◎", those with occurrence of fine cracks were evaluated as "○ " and those with occurrence of open cracks was evaluated as "X".

**Table 2-1**

* out of definition of the present invention

| No. | | Chemical composition (wt%) | | | | | | | | Extrusion rate (m/min) | Quenching method | Thickness s (mm) | GG layer thickness (μm) | GG layer ratio (%) | GG layer grain size (μm) |
|---|---|---|---|---|---|---|---|---|---|---|---|---|---|---|---|
| | | Si | Fe | Cu | Mn | Mg | Cr | Ti | Zr | | | | | | |
| example | 1 | 0.61 | 0.22 | 0.20 | 0.25 | 0.51 | tr. | 0.02 | 0.13 | 15 | Air cooling | 2 | 200 | 10 | 50 |
| | 2 | 0.62 | 0.23 | 0.20 | 0.19 | 0.51 | tr. | 0.02 | 0.14 | | Air cooling | 2 | 300 | 30 | 60 |
| | 3 | 0.64 | 0.20 | 0.20 | 0.15 | 0.51 | tr. | 0.02 | 0.10 | | Air cooling | 2 | 500 | 50 | 12 |
| | 4 | 0.58 | 0.20 | 0.20 | 0.25 | 0.50 | tr. | 0.02 | 0.13 | | Air cooling | 3 | 300 | 10 | 40 |
| | 5 | 0.90 | 0.20 | 0.51 | 0.20 | 0.60 | tr. | 0.03 | 0.10 | 10 | water cooling | 2 | 200 | 10 | 80 |
| | 6 | 0.91 | 0.23 | 0.50 | 0.36 | 0.65 | tr. | 0.02 | 0.12 | 7 | water cooling | 5 | 250 | 5 | 30 |
| | 7 | 0.92 | 0.25 | 0.49 | 0.19 | 0.60 | tr. | 0.02 | 0.14 | | water cooling | 5 | 1500 | 30 | 90 |
| | 8 | 0.92 | 0.25 | 0.49 | 0.35 | 0.62 | tr. | 0.02 | 0.13 | 6 | water cooling | 2 | 60 | 3 | 30 |
| comparative example | 9 | 0.86 | 0.27 | 0.47 | 0.32 | 0.62 | 0.03 | 0.02 | 0.12 | 3 | water cooling | 2 | 0* | 0* | - |
| | 10 | 0.60 | 0.20 | 0.20 | 0.07 | 0.50 | tr. | 0.02 | 0.09 | 15 | Air cooling | 2 | 600 | 60* | 130 |
| | 11 | 0.57 | 0.17 | 0.20 | tr. | 0.49 | tr. | 0.03 | 0.09 | | Air cooling | 2 | 750 | 75* | 80 |
| | 12 | 0.55 | 0.20 | 0.10 | tr. | 0.70 | tr. | 0.03 | tr. | | Air cooling | 2 | 1000 | 100* | 100 |
| | 13 | 0.55 | 0.20 | 0.10 | 0.09 | 0.69 | 0.04 | 0.02 | tr. | | Air cooling | 3 | 2700 | 90* | 100 |
| | 14 | 0.91 | 0.23 | 0.50 | 0.09 | 0.61 | 0.04 | 0.03 | tr. | 10 | water cooling | 2 | 1800 | 90* | 110 |
| | 15 | 0.89 | 0.27 | 0.53 | tr. | 0.63 | tr. | 0.02 | tr. | | water cooling | 5 | 5000 | 100* | 110 |
| | 16 | 0.86 | 0.27 | 0.47 | 0.32 | 0.62 | 0.03 | 0.02 | 0.12 | 7 | Air cooling | 2 | 100 | 5 | 20 |
| | 17 | 0.60 | 0.23 | 0.20 | 0.15 | 0.53 | tr. | 0.02 | 0.10 | 15 | Air cooling | 2 | 1000 | 50 | 300* |

As shown in Table 2-2, those having the GG layer thickness within the range defined by the present invention (Nos. 1 - 8) cause no cracks and show high yield stress and excellent energy absorbing property (no cracks both in longitudinal and lateral directions, high absorption energy and maximum load)

## Table 2-2

| No. | | Result of tensile test | | | Result of longitudinal compression test | | | Lateral compression |
|---|---|---|---|---|---|---|---|---|
| | | $\sigma$0.2 (Mpa) | $\sigma$B (Mpa) | Elongation(%) | Absorption energy (J) | Maximum load (kN) | Cracking resistance | Cracking resistance |
| example | 1 | 256 | 207 | 11.0 | 2920 | 75.3 | ◎ | ◎ |
| | 2 | 256 | 210 | 14.1 | 3200 | 93.1 | ◎ | ◎ |
| | 3 | 270 | 228 | 12.1 | 3450 | 99.4 | ○ | ○ |
| | 4 | 262 | 210 | 12.3 | 10050 | 181 | ◎ | ◎ |
| | 5 | 305 | 289 | 13.6 | 3210 | 115 | ◎ | ◎ |
| | 6 | 321 | 290 | 13.2 | 21200 | 661 | ◎ | ◎ |
| | 7 | 315 | 282 | 14.1 | 20100 | 652 | ◎ | ◎ |
| | 8 | 230 | 201 | 14.2 | 2630 | 68.9 | ◎ | ◎ |
| comp.example | 9 | 213 | 155* | 16.3 | 1260 | 52.6 | ◎ | ◎ |
| | 10 | 277 | 225 | 12.5 | 3310 | 92.2 | × | × |
| | 11 | 280 | 228 | 14.0 | 3000 | 102 | × | × |
| | 12 | 262 | 230 | 14.0 | 2710 | 99.0 | × | × |
| | 13 | 270 | 228 | 12.5 | 8250 | 178 | × | × |
| | 14 | 295 | 252 | 12.7 | 3010 | 108 | × | × |
| | 15 | 341 | 295 | 12.8 | 15200 | 665 | × | × |
| | 16 | 202 | 142* | 15.6 | 1150 | 48.2 | ◎ | ◎ |
| | 17 | 273 | 231 | 13.1 | 2760 | 97.2 | × | × |

* out of definition of the present invention or inferior to the present invention

11

On the other hand, No. 9 not formed with the surface GG layer has an yield stress of less than 200 MPa, has low absorption energy and maximum load, those having the GG layer thickness in excess of the range defined by the present invention (Nos. 10 - 15) are poor in the cracking resistance, No. 16 having an yield stress not reaching 200 MPa although having the GG layer thickness within the range defined according to the present invention has low absorption energy and maximum load, and No. 17 with low absorption energy and having the GG layer crystal grain size in excess of 200 $\mu$m is poor in the cracking resistance.

[Example 3]

The example of the present invention is to be explained in comparison with a comparative example out of the definition for the scope of the claims of the present invention.

At first, Al-Mg-Si series aluminum alloy billets (diameter: 155 mm) of the chemical composition shown in the following Table 3-1 were manufactured by melting by the usual method and a homogenizing treatment was applied under the condition of about 540°C × 4 hours.

Then, each of the billets was subjected to extrusion under the conditions at an extrusion temperature of 500°C and an extrusion rate of 5 m/min, air cooled or water cooled press quenching was conducted on-line just after extrusion to manufacture extrusion materials each of hollow square cross section as shown in Fig. 4-(1) (a square pipe having an outer shape of 70 × 54 mm and a thickness of 2 mm). An artificial aging treatment was applied under the conditions shown in Table 3-1 to prepare test materials.

Table 3-1

| No. | chemical composition (wt%) | | | | | | | | Quenching method | Aging condition |
|---|---|---|---|---|---|---|---|---|---|---|
|  | Si | Fe | Cu | Mn | Mg | Cr | Ti | Zr |  |  |
| 1 | 0.58 | 0.18 | 0.21 | 0.15 | 0.54 | tr. | 0.02 | 0.09 | air cooling | 190°C×3hr |
| 2 | 0.61 | 0.22 | 0.20 | 0.25 | 0.51 | tr. | 0.03 | 0.13 | air cooling | 190°C×3hr |
| 3 | 0.64 | 0.24 | 0.20 | 0.15 | 0.51 | tr. | 0.03 | 0.10 | air cooling | 190°C×3hr |
| 4 | 0.66 | 0.24 | 0.20 | 0.15 | 0.51 | tr. | 0.03 | 0.13 | air cooling | 190°C×3hr |
| 5 | 0.93 | 0.25 | 0.51 | 0.36 | 0.67 | tr. | 0.02 | 0.13 | water cooling | 210°C×3hr |
| 6 | 0.93 | 0.25 | 0.51 | 0.36 | 0.67 | tr. | 0.02 | 0.13 | water cooling | 190°C×3hr |
| 7 | 0.93 | 0.25 | 0.51 | 0.36 | 0.67 | tr. | 0.02 | 0.13 | water cooling | 190°C×6hr |
| 8 | 0.54 | 0.20 | tr. | tr. | 0.65 | tr. | 0.02 | tr. | air cooling | 190°C×3hr |
| 9 | 0.93 | 0.25 | 0.51 | 0.36 | 0.67 | tr. | 0.02 | 0.13 | water cooling | 160°C×6hr |

Table 3-2

| No. | thickness reduction ratio (%) | Result of tensile test | | | Result of longitudinal compression test | | | Lateral compression |
|---|---|---|---|---|---|---|---|---|
| | | σ0.2 (Mpa) | σB (Mpa) | Elongation (%) | Absorption energy (J) | Maximum load (kN) | Cracking resistance | Cracking resistance |
| 1 | 40.0 | 270 | 228 | 14.1 | 3390 | 99.4 | ◯ | ◯ |
| 2 | 38.2 | 256 | 218 | 14.2 | 2800 | 85.8 | ◯ | ◯ |
| 3 | 35.1 | 266 | 236 | 12.1 | 3120 | 98.6 | ◯ | ◯ |
| 4 | 28.3 | 259 | 222 | 12.8 | 2930 | 93.6 | ◯ | ◯ |
| 5 | 40.8 | 314 | 271 | 13.2 | 3530 | 118 | ◯ | ◯ |
| 6 | 27.6 | 371 | 325 | 13.8 | 4370 | 129 | ◯ | ◯ |
| 7 | 35.3 | 358 | 310 | 12.9 | 4010 | 125 | ◯ | ◯ |
| 8 | 24.3* | 259 | 230 | 15.6 | 2660 | 99.3 | X | X |
| 9 | 23.1* | 362 | 279 | 20.3 | 3230 | 121 | X | X |

\* out of definition in claims

JIS No. 5 test specimens were sampled from each of the test materials, and tensile strength σB, yield stress $\sigma_{0.2}$, elongation at break (elongation strain) δ were measured in accordance with the tensile test method for the metal material as defined in JIS Z 2241. The average thickness on the ruptured surface was measured and the thickness reduction ratio value defined previously was determined. The result is shown in Table 3-2.

Further a longitudinal and lateral crushing test was conducted for each of the test materials. In the longitudinal crushing test, a static compression load was applied in the axial direction by an Amsler Tester as shown in Fig. 2, which was compressed to 100 mm to obtain a load-displacement curve and a maximum load and an absorption energy up to 100 mm were determined. The cracking resistance was evaluated visually and those free from occurrence of cracks (cracks penetrating the thickness)see evaluated as "◯ " and those with occurrence of open cracks were evaluated as "X". In the lateral cracking test, the test material was placed horizontally with the longer sides being situated at upper and lower positions and static compressive load was applied to compress the material down to 20 mm and the cracking resistance was evaluated visually. Evaluation for the cracking resistance is identical with that of the longitudinal crushing test. The result was also shown together in Table 3-2.

As can be seen from Table 3-2, any of Nos. 1 to 7 with the thickness reduction ratio of 25% or more is excellent both in the longitudinal and lateral compression cracking resistance. Nos. 8 and 9 with the thickness reduction ratio of less than 25% are poor in the cracking resistance. In addition, while Nos. 1, 3 have the yield stress substantially equal with that of No. 8 they show absorption energy higher by about 20% compared with No. 8. Even in Nos. 2 and 4 having the yield stress lower than that of No. 8, the absorption energy is higher than that in No. 8 although the maximum load is somewhat lower. No. 5 has the yield stress substantially equal with No. 9 but the absorption energy is higher compared with No. 9. Nos. 6, 7, which are high in yield stress, show absorption energy much higher than that of No.9.

According to the first aspect of the present invention, a shock absorbing material having high strength (yield stress) and showing excellent energy absorption property can be obtained by conducting press quenching under air cooling followed by the by aging treatment for the Al-Mg-Si series aluminum alloy extrusion material. Further, according to the present invention, a shock absorbing material which is advantageous in view of the dimensional accuracy and the cost compared with that formed by water cooling can be obtained since this is press quenching under air cooling.

According to the second aspect of the present invention, a shock absorbing material having high strength and showing excellent energy absorption property can be obtained by defining the yield stress, the ratio of the surface recrystallization layer and the grain size for the Al-Mg-Si series aluminum alloy extrusion material.

According to the third aspect of the present invention, since the thickness reduction ratio is defined to 25% or more, a shock absorbing material having excellent cracking resistance to the longitudinal compression and the lateral compression and having high absorption energy can be obtained.

**EP 1 041 165 A1**

**Claims**

1. A shock absorbing material comprising an Al-Mg-Si series aluminum alloy containing:

    from 0.30 to 0.70wt% of Mg;

    from 0.10 to 0.50wt% of Si in excess of a balanced composition for $Mg_2Si$; and

    from 0.10 to 0.40wt% of one or more of Mn, Cr and Zr in total, wherein said shock absorbing material is of a hollow cross section, comprises a microstructure having a fibrous and has an yield stress of 210 MPa or more.

2. The shock absorbing material as defined in claim 1, wherein said microstructure further comprises surface recrystallization layer with the thickness being 10% or less and the thickness of said fibrous structure is 50% or more for the entire.

3. The shock absorbing material as defined in claim 1 or 2, wherein the total amount of Si is from 0.50 to 0.70wt%.

4. The shock absorbing material as defined in anyone of clams 1-3, further containing from 0.10 to 0.40% of Cu.

5. The shock absorbing material as defined in anyone of claims 1 to 4, being obtainable from an aluminum alloy extrusion material and by conducting press quenching under air cooling just after extrusion and then conducting aging.

6. The shock absorbing material as defined anyone of clams 1 to 4, being obtainable from an aluminum alloy extrusion material and by conducting press quenching at a cooling rate of 100 to 300°C/min just after extrusion and then applying aging.

7. A shock absorbing material comprising an Al-Mg-Si series aluminum alloy containing:

    from 0.20 to 1.1wt% of Mg; and

    from 0.20 to 1.2wt% of Si,

    wherein said shock absorbing material is of a hollow cross section and comprises a microstructure having the thickness of a surface recrystallization layer of 1 to 50% for the entire thickness with the balance of a fibrous structure, having a grain size in the direction of the thickness of the surface recrystallization layer of 200 μm or less, and having an yield stress of 200 MPa or more.

8. The shock absorbing material as defined in claim 7, containing from 0.40 to 0.80 wt% of Mg and from 0.50 to 1.0 wt% of Si.

9. A shock absorbing material comprising an Al-Mg-Si series aluminum alloy containing:

    from 0.20 to 1.1wt% of Mg; and

    from 0.20 to 1.2wt% of Si,

    wherein said absorbing material is of a hollow cross section and has a thickness reduction ratio of 25% or more at the ruptured cross section when applying a tensile test.

10. The shock absorbing material as defined in claim 9, containing from 0.40 to 0.80 wt% of Mg and from 0.50 to 1.1 wt% of Si.

11. The shock absorbing material as defined in anyone of claims 7 to 10, further containing one or more of Mn, Cr and Zr within a range from 0.05 to 0.40% of Mn, from 0.05 to 0.20% of Cr and from 0.05 to 0.20% of Zr.

12. The shock absorbing material as defined in anyone of claims 7 to 11, further containing from 0.05 to 0.7% of Cu.

13. The shock absorbing material as defined in anyone of clams 1 to 12, further containing from 0.005 to 0.2% of Ti.

**14**

**14.** The shock absorbing material as defined in anyone of clams 9 to 13, being obtainable by press quenching just after extrusion and then applying aging treatment.

# F I G . I

2 →

50

70

# F I G . 2

COMPRESSION

200mm

DIRECTION
OF
EXTRUSION

BEFORE CRUSHING

100mm

AFTER CRUSHING

# F I G . 3

COMPRESSION

BEFORE CRUSHING

20mm

AFTER CRUSHING

# F I G. 4

(1)

R7
R5
2 →
54
70

(2)

R7
R5
3 →
54
70

(3)

RI5
RIO
5 →
60
80

EP 1 041 165 A1

# EUROPEAN SEARCH REPORT

European Patent Office

**Application Number**

EP 00 10 7024

## DOCUMENTS CONSIDERED TO BE RELEVANT

| Category | Citation of document with indication, where appropriate, of relevant passages | Relevant to claim | CLASSIFICATION OF THE APPLICATION (Int.CL7) |
|---|---|---|---|
| X | US 3 717 512 A (SPERRY P ET AL) 20 February 1973 (1973-02-20) * column 1, line 59 - line 60; claims 1-6; table II * * column 3, line 45 - column 4, line 13 * | 1-14 | C22C21/08 |
| X | PATENT ABSTRACTS OF JAPAN vol. 018, no. 004 (C-1149), 6 January 1994 (1994-01-06) -& JP 05 247575 A (KOBE STEEL LTD), 24 September 1993 (1993-09-24) * abstract; examples 1,8 * | 1-14 | |
| A | PATENT ABSTRACTS OF JAPAN vol. 1998, no. 03, 27 February 1998 (1998-02-27) -& JP 09 296244 A (FURUKAWA ELECTRIC CO LTD:THE;KANTO AUTO WORKS LTD), 18 November 1997 (1997-11-18) * abstract * | | |
| A,D | PATENT ABSTRACTS OF JAPAN vol. 1998, no. 01, 30 January 1998 (1998-01-30) -& JP 09 256096 A (KOBE STEEL LTD), 30 September 1997 (1997-09-30) * abstract * | | TECHNICAL FIELDS SEARCHED (Int.CL7) C22C |
| A,D | PATENT ABSTRACTS OF JAPAN vol. 018, no. 242 (C-1197), 10 May 1994 (1994-05-10) -& JP 06 025783 A (KOBE STEEL LTD), 1 February 1994 (1994-02-01) * abstract * | | |

-/--

The present search report has been drawn up for all claims

| Place of search | Date of completion of the search | Examiner |
|---|---|---|
| MUNICH | 16 May 2000 | Ashley, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## EUROPEAN SEARCH REPORT

European Patent Office

**Application Number**

EP 00 10 7024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | PATENT ABSTRACTS OF JAPAN<br>vol. 1995, no. 05,<br>30 June 1995 (1995-06-30)<br>-& JP 07 054090 A (KOBE STEEL LTD),<br>28 February 1995 (1995-02-28)<br>* abstract * | | |

**TECHNICAL FIELDS SEARCHED (Int.Cl.7)**

The present search report has been drawn up for all claims

| Place of search | Date of completion of the search | Examiner |
|---|---|---|
| MUNICH | 16 May 2000 | Ashley, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 10 7024

16-05-2000

| Patent document cited in search report | | Publication date | Patent family member(s) | | Publication date |
|---|---|---|---|---|---|
| US 3717512 | A | 20-02-1973 | BE | 780611 A | 13-09-1972 |
| | | | CA | 935673 A | 23-10-1973 |
| | | | CH | 594056 A | 30-12-1977 |
| | | | DE | 2213136 A | 03-05-1973 |
| | | | FR | 2158782 A | 15-06-1973 |
| | | | IT | 1045683 B | 10-06-1980 |
| | | | JP | 48052613 A | 24-07-1973 |
| | | | JP | 54041970 B | 11-12-1979 |
| JP 05247575 | A | 24-09-1993 | JP | 2908929 B | 23-06-1999 |
| JP 09296244 | A | 18-11-1997 | NONE | | |
| JP 09256096 | A | 30-09-1997 | NONE | | |
| JP 06025783 | A | 01-02-1994 | JP | 2857282 B | 17-02-1999 |
| JP 07054090 | A | 28-02-1995 | NONE | | |